# EUROPÄISCHE PATENTSCHRIFT

(11) **EP 2 316 692 B1**
(45) Veröffentlichungstag und Bekanntmachung des Hinweises auf die Patenterteilung: **21.05.2014**
(21) Anmeldenummer: 10004240.7
(22) Anmeldetag: 21.04.2010
(51) Int. Cl.: B60P 1/48, B60P 7/13

(54) **Einrichtung zur Ladungssicherung für den Transport von genormten Kipp-oder Absetzbehältern auf Absetzkipperfahrzeugen**
Device for securing loads for transport on standardized tipping or sedimentation tanks on sedimentation tipping vehicles
Dispositif de sécurisation du chargement pour le transport de bennes basculantes ou des bennes de dépôt standardisées sur des multi-bennes

(30) Priorität: 28.10.2009 DE 202009014529 U
(43) Veröffentlichungstag der Anmeldung: 04.05.2011
(73) Patentinhaber: Eckardt, Olaf, 99510 Apolda (DE)
(72) Erfinder: Eckardt, Olaf, 99510 Apolda (DE)
(74) Vertreter: Callies, Rainer Michael

(56) Entgegenhaltungen:
- EP-A2- 1 661 755
- DE-U1- 20 015 908
- DE-U1-202008 012 609
- GB-A- 2 384 768

## Beschreibung

Die Erfindung betrifft Einrichtungen zur Ladungssicherung für den Transport von genormten Kipp- oder Absetzbehältern auf einem Absetzkipperfahrzeug, gemäß dem jeweiligen Oberbegriff des Anspruchs 1 bzw. 14.

Zur ausreichenden Ladungssicherung beim Transport von Kipp- und Absetzbehältern auf Absetzkipperfahrzeugen sind insbesondere in Blatt 17 der VDI 2700 und der Straßenverkehrsordnung zwingende Regeln vorgeschrieben, um einen derartigen Transport gesichert und gefahrlos zu gewährleisten.

Mit den bisher auf Absetzkipperfahrzeugen vorgesehenen formschlüssigen Anschlägen kombiniert mit der bekannten X- und/oder Y-Verzurrung der Kipp- oder Absetzbehälter kann auch eine den Vorschriften entsprechende Ladungssicherung gewährleistet werden, wenn die dafür vorgeschriebenen Regeln verantwortungsvoll zur ausreichenden Sicherung der Kipp- und Absetzbehälter beim Transport umgesetzt sind.

Das Problem ist, dass die gegenwärtig bekannten und zur Anwendung kommenden Ladungssicherungen zu diesem Zweck zum einen keine kraft- und/oder formschlüssige Verriegelung der Kipp- und Absetzbehälter gegen die Fahrtrichtung aufweisen und zum anderen die Kettenverzurrung einerseits nicht in jedem Fall problemlos durchgeführt werden kann, insbesondere dann, wenn das Personal nicht besonders geschult ist, und zum anderen benötigt speziell die Kettenverzurrung gleich welcher Art einen größeren Zeitaufwand. Diese Probleme führen oft dazu, dass besonders bei kurzen Transportstrecken die Führer von derartigen Fahrzeugen infolge des allgemeinen bekannten Zeitdrucks, dem sie unterliegen, die Ladungssicherung der Kipp- oder Absetzbehälter nicht entsprechend den Vorschriften ausführen, wie Kontrollen von diesen Transporten vielfach zeigen. Ein unsachgemäß gesicherter, insbesondere verzurrter Kipp- oder Absetzbehälter auf dem Trägerfahrzeug kann in Folge.der einwirkenden Fliehkraft bei Kurvenfahrten oder Ausweichmanövern auf den Kipp- oder Absetzbehälter zu einem Kippen oder Querrutschen kommen, das mindestens kurzzeitig die Fahrstabilität des Trägerfahrzeuges so erheblich beeinträchtigt, dass Unfälle nicht ausgeschlossen werden können. Ein nicht sachgemäßes Verzurren der Kipp- oder Absetzbehälter kann aber auch beim Überfahren von Unebenheiten in der Fahrbahn zum Springen desselben führen, was eine erhebliche Lärmbelästigung zur Folge hat.

Aus der DE 20 2008 012 609 U1 ist eine für beide unabhängigen Ansprüche gattungsgemäße Ladungssicherungseinrichtung bekannt. Sie weist eine Verzurrung auf und ferner Behälteranschläge in Form einer Pyramide bzw. eines Pyramidenstumpfes zum seitlichen Halt eines Behälters. Zum Halt in und gegen die Fahrtrichtung sind weitere separate und anders geformte Behälteranschläge vorgesehen. Indem die pyramidenartigen Behälteranschläge drehbar außermittig auf einer Grundplatte befestigt sind, können durch eine entsprechend gewählte Drehposition verschiedene Seitenflächen der Behälteranschläge zur Anlage an dem Behälter eingestellt werden. Allerdings ist die Vornahme dieser Einstellung in der Handhabung durch eine Person relativ aufwendig, indem die adäquate Drehposition von vier Behälteranschlägen gefunden werden muss.

Ferner ist aus der DE 200 15 908 U1 eine für beide unabhängigen Ansprüche gattungsgemäße Ladungssicherungseinrichtung bekannt. Sie weist acht Behälteranschläge auf, von denen jeweils zwei gegen eine Seitenwand eines Behälters gepresst werden. Wenn der Anpressdruck genügend stark ist, sollen diese im Bodenbereich angeordneten Behälteranschläge ausreichend sein. Ein Risiko einer dennoch stattfindenden vertikalen Bewegung eines Behälters in extremeren Fahrsituationen erscheint aber wohl nicht mit Sicherheit ausschließbar. Bei einer solchen Ladungssicherung muss allerdings ein Dauerdruck mittels einer Druckspeichereinrichtung gewährleistet sein, insbesondere weil sich später schmelzendes Eis oder lösender Schmutz zwischen der Behälterwand und dem Behälteranschlag befinden können. Auch kann bei zu hohem Druck sogar eine mögliche Behälterbodendeformation ein Problem sein.

Aufgabe der vorliegenden Erfindung ist es daher, eine Einrichtung zur Ladungssicherung von Kipp- oder Absetzbehältern auf Absetzkipperfahrzeugen zur Verfügung zu stellen, die in Verbindung mit den bekannten Sicherungselementen auf oder im Boden des Absetzkipperfahrzeugs vorgesehen sind, einen Kipp- oder Absetzbehälter bei einem geringen Zeitaufwand und auch mit einem wenig geschulten Personal so auf einen Absetzkipperfahrzeug zu sichern, dass die vorgeschriebenen Anforde- rungen an eine Ladungssicherung von Kipp- oder Absetzbehältern auf Absetzkipperfahrzeugen für einen gesicherten Transport erfüllt sind.

Diese Aufgabe wird erfindungsgemäß mit einer Einrichtung gelöst, bei der die Behälteranschläge jeweils mindestens zwei vordere und hintere Sicherungsschuhe sind, die mit Behälteranschlagsflächen in bzw. gegen die Fahrtrichtung und mit seitlichen Behälteranschlagsflächen ausgebildet sind, die jeweils eine Kontur aufweisen, die zu den angrenzenden Flächen eines aufgesetzten Kipp- und Absetzbehälters formschlüssig ist, und bei der seitlich auf oder unter dem Boden des Absetzkipperfahrzeuges mindestens zwei gegenüberliegende und quer zum Boden verschwenkbare und in Eingriffsstellung arretierbare Verriegelungselemente mit mindestens einer Klaue angeordnet sind, die in Eingriffsstellung über eine horizontal verlaufende seitliche Verstärkung des Kipp- oder Absetzbehälters formschlüssig übergreift.

Mit dieser vorgeschlagenen Ladungssicherung ist ein Kipp- oder Absetzbehälter sowohl seitlich als auch in und gegen die Fahrtrichtung und zum anderen gegen die Kippgefährdung bei Kurvenfahrten und Ausweichmanövern entsprechend den vorgeschriebenen Regeln der VDI 2700 Blatt 17 beim Transport stabil auf dem Absetzkipperfahrzeug gesichert.

Durch die Ausbildung der Sicherungsschuhe mit Behälteranschlagsflächen, die jeweils der angrenzenden seitlichen Kontur und der Kontur in bzw. gegen die Fahrtrichtung des aufgesetzten Kipp- oder Absetzbehälters angepasst sind, steht stets eine Behälteranschlagfläche bereit, mit der die jeweils angrenzende Fläche des Kipp- oder Absetzbehälters eine stabile formschlüssige oder kraftschlüssige Verbindung eingehen kann und somit den aufgesetzten Kipp- oder Absetzbehälter auf dem Absetzkipperfahrzeug in alle Richtungen stabil gegen Verrutschen sichert. Durch die im Bereich des Bodens angeordneten und in Eingriffsstellung arretierbaren gegenüberliegenden Verriegelungselemente, die bevorzugt bei den allgemein zur Anwendung kommenden genormten Kipp- oder Absetzbehältern über die horizontal verlaufende und genormte Normverstärkung übergreifen, ist ein aufgesetzter Kipp- oder Absetzbehälter gegen die Kippgefährdung bei Kurvenfahrten und Ausweichmanövern stabil mit einem geringen Zeitaufwand auch bei ungeschultem Personal auf dem Absetzkipperfahrzeug gesichert.

Folglich kann beim Einsatz der erfinderischen Einrichtung infolge der am Boden des Absetzkipperfahrzeuges gegenüberliegenden und verschwenkbar angeordneten sowie starr ausgelegten Verriegelungselemente auf eine zeitaufwendige X- und Y-Verzurrung verzichtet werden, so dass zum einen die Verfügbarkeit und damit die Nutzungsdauer der Absetzkipperfahrzeuge wesentlich erhöht und zum anderen eine nicht ordnungsgemäß ausgeführte oder falsch angelegte X- oder Y-Verzurrung durch Zeitdruck oder durch wenig geschultes Personal ausgeschlossen wird.

Gemäß einer bevorzugten Ausführungsform der Erfindung sind die Sicherungsschuhe auf Gleit- und Führungsschienen horizontal verschieb- und arretierbar sowie bevorzugt abnehmbar festgelegt, die mit dem Boden des Absetzkipperfahrzeuges fest verbunden sind, wobei die Sicherungsschuhe vorteilhafterweise mittels federnd gelagerten Bolzen in vorgesehenen Arretierungsbohrungen in den Gleit- und Führungsschienen arretiert werden. Damit können die Sicherungsschuhe stets auf eine sehr einfache Weise und problemlos an verschiedene Bodengrößen von Kipp- oder Absetzbehältern angepasst werden.

Bevorzugt weisen die vorderen Sicherungsschuhe eine Höhe bis max. 400 mm auf und die hinteren Sicherungsschuhe eine Höhe bis max. 300 mm, bevorzugt 85 mm auf. Auf diese Weise sind die Kipp- oder Absetzbehälter ausreichend gegen Verrutschen gesichert und die festgelegten Sicherungsschuhe sind beim Aufsetzen der Kipp- oder Absetzbehälter störungsfrei.

Gemäß einer weiteren bevorzugten Ausführungsform der Erfindung ist jedes Verriegelungselement in einem auf oder unter dem Boden des Absetzkipperfahrzeugs angeordneten Gehäuse oder Konsole verschwenkbar gelagert und jedes Verriegelungselement ist über einen hydraulischen oder pneumatischen oder mechanischen Antrieb angetrieben. Auf diese Weise wird die benötigte Zeit für die Ladungssicherung eines Kipp- oder Absetzbehälters weiter verringert und die für eine ordnungsgemäße Sicherung des Kipp- oder Absetzbehälters erforderlichen Kräfte können exakt vorgegeben werden und sind damit nicht personalabhängig. Folglich ist nach jeder Verriegelung sichergestellt, dass der Kipp- und Absetzbehälter stets auf dem Absetzkipperfahrzeug lagestabil und kippstabil gesichert ist.

Der hydraulische oder pneumatische oder mechanische Antrieb kann dabei sowohl am gegenüberliegenden Ende der Klaue und unterhalb des Schwenkpunktes als auch mit dem einen Ende zwischen dem Schwenkpunkt und der Klaue und mit dem anderen Ende in einer Konsole am Boden des Absetzkipperfahrzeugs festgelegt sein.

Nach einer weiteren bevorzugten Ausführungsform der Erfindung ist das Verriegelungselement ein teleskopierbares und arretierbares Verriegelungselement, das vorteilhafterweise mechanisch oder pneumatisch oder hydraulisch teleskopierbar ist. Durch die Teleskopierbarkeit kann jedes Verriegelungselement speziell an die Lage der horizontal über die Längsseiten des Kipp- und Absetzbehälters verlaufenden Versteifungen angepasst werden, so dass auch die Einrichtung problemlos für Kipp- oder Absetzbehälter nutzbar ist, die eine abweichende Lage der horizontal verlaufenden Versteifung von den allgemein üblichen genormten Kipp- oder Absetzbehältern aufweisen, oder bei genormten Kipp- und Absetzbehältern, die infolge eines geringen Fassungsvermögens eine veränderte Lage der Versteifung aufweisen. Vielmehr, bei einer entsprechenden stufenlosen Ausbildung der mechanischen Teleskopierbarkeit oder bei einer hydraulischen oder pneumatischen Teleskopierbarkeit, kann der Kipp- oder Absetzbehälter über die Verriegelungselemente mit einem vorgegebenen Niederhaltedruck beaufschlagt werden, der das vielfach im Straßenverkehr zu beobachtende Springen der Kipp- oder Absetzbehälter beim Befahren von unebenen Fahrbahnen ausschließt.

Die Verriegelungselemente bestehen bevorzugt aus einem Profilelement mit einer statischen Auslegung, die gegen die einwirkenden Fliehkräfte während des Fahrbetriebs zug- und biegestabil ist, und jedes Profilelement ist am oberen Ende mit mindestens einer übergreifbaren Klaue ausgebildet.

Ein in dieser Weise ausgebildetes Verriegelungselement, das vorzugsweise ein verbindungsfreies Element ist, verfügt über ein ausreichendes Widerstandsmoment, um die zwangsläufig auftretenden Fliehkräfte bei Kurvenfahrten, Ausweichmanövern und bei Längsbeschleunigung so zu kompensieren, dass eine zuverlässige Ladegutsicherung gegen die Kippgefährdung gewährleistet ist. Mit der Ausbildung der Profilelemente mit mehr als einer Klaue werden beabstandete kleinflächigere Übergriffspunkte geschaffen, mit denen sichergestellt werden kann, dass auch bei nicht sauberen Kontaktebenen beispielsweise der Normversteifung eines Kipp- und Absetzbehälters ein Verriegelungselement beim Übergreifen nicht verkantet und somit stets eine gleichmäßig verteilte Kraft auf die Normversteifung ausübt.

Bei nur zwei gegenüberliegenden eingesetzten Verriegelungselementen sind Verriegelungselemente grundsätzlich zum Kipp- oder Absetzbehälter annähernd mittig angeordnet. Auf diese Weise wird einem Querrutschen der Kipp- oder Absetzbehälter zusätzlich entgegengewirkt, insbesondere dann, wenn die seitlichen vorgesehenen Anschläge auf dem Boden nicht direkt an einem Kipp- oder Absetzbehälter anstehen.

Um bei bereits vorhandenen Absetzkipperfahrzeugen auf die zeitaufwendige und mit ausreichenden Fachkenntnissen auszuführende X- und Y-Verzurrung zu verzichten, wird zur Lösung der Aufgabe gemäß Anspruch 14 vorgeschlagen, einen Kipp- oder Absetzbehälter auf Absetzkipperfahrzeugen, die am Boden bereits mit mechanisch oder hydraulisch oder pneumatisch zu betätigenden bzw. festen Behälteranschlägen oder Verriegelungen ausgebildet sind, gegen die Kippgefährdung dadurch zu sichern, dass seitlich auf oder unter dem Boden des Absetzkipperfahrzeuges mindestens zwei gegenüberliegende und quer zum Boden verschwenkbare und in Eingriffsstellung arretierbare Verriegelungselemente mit mindestens einer Klaue angeordnet sind, die in Eingriffsstellung über eine horizontal verlaufende seitliche Verstärkung des Kipp- oder Absetzbehälters formschlüssig übergreift. Damit kann auch bei einem bereits vorhandenen und mit Behälteranschlägen jeglicher Art ausgerüsteten Absetzkipperfahrzeug die zeit- und kostengünstige sowie von Kenntnisstand des Personals unabhängige Ladungssicherung gegen die Kippgefährdung bei Kurvenfahrten und Ausweichsmanöver wirtschaftlich nachgerüstet werden.

Weitere Einzelheiten der Erfindung ergeben sich aus der nachfolgenden Beschreibung und den beigefügten Zeichnungen, in denen bevorzugte Ausführungsformen der Erfindung schematisch dargestellt sind.

Die Zeichnungen zeigen:
- Fig. 1:: eine schematische Darstellung eines Verriegelungs- elements an einer Seite eines Kipp- oder Absetzbehäl- ters mit der bevorzugten Anordnung eines pneumati- schen oder hydraulischen Antriebs,
- Fig. 2:: eine schematische Darstellung von Fig.1 mit einer anderen Anordnung eines bevorzugten pneumatischen oder hydraulischen Antriebs,
- Fig. 3:: eine schematische Darstellung eines hinteren Siche- rungsschuhs auf einer Gleit- und Führungsschiene,
- Fig. 4:: eine schematische Darstellung eines vorderen Siche- rungsschuhs, auf einer Gleit- und Führungsschiene,
- Fig. 5:: Boden eines Absetzkipperfahrzeuges mit angedeuteten Sicherungsschuhen und seitlichen Verriegelungsele- menten,
- Fig. 6:: Boden eines Absetzkipperfahrzeuges mit angedeuteten Sicherungsschuhen und seitlichen Verriegelungsele- menten und gesichertem Kipp- oder Absetzbehälter,
- Fig. 7:: eine spezielle Ausführungsform eines Verriegelungs- elements.

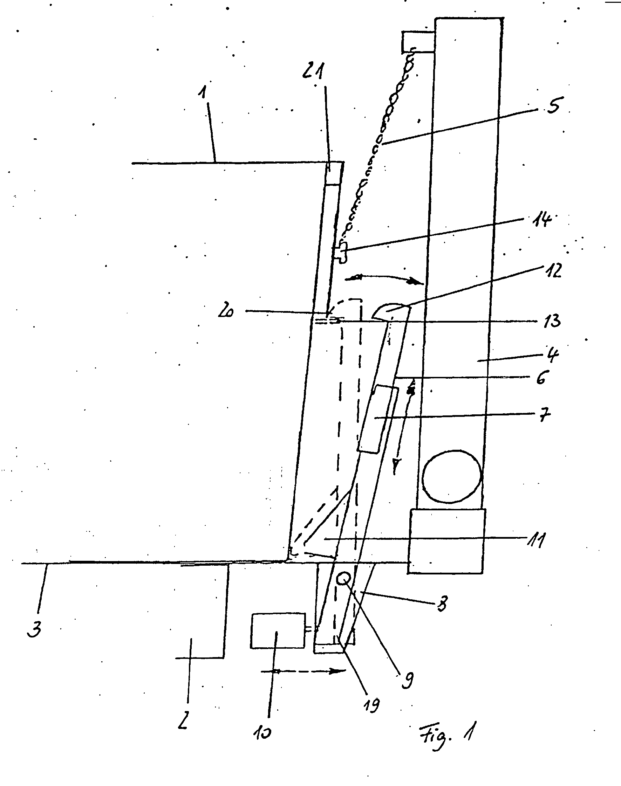

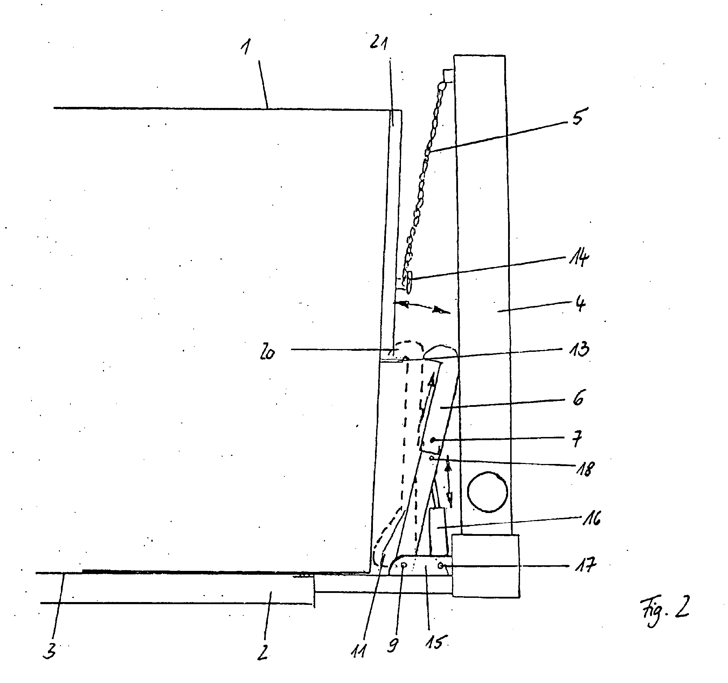

In den Fig. 1 und Fig. 2 ist das Absetzkipperfahrzeug nur schematisch durch ein Detail des Fahrzeuggestells 2 angedeutet, auf dem der Boden 3 des Absetzkipperfahrzeuges festgelegt ist und auf oder in dem die hier nicht weiter gezeigten Anschläge in und entgegen der Fahrtrichtung und für die seitliche Begrenzung der Kipp- oder Absetzbehälter 1, wie allgemein bekannt, angeordnet sind. Beiderseits am Boden 3 des nicht weiter gezeigten Absetzkipperfahrzeuges ist, wie allgemein üblich, je ein Absetzarm 4 angeordnet, an dessen oberem Ende die Absetzkette 5 befestigt ist, die in einen Aufhängezapfen 14 des Kipp- oder Absetzbehälters 1 eingehängt ist.

Die erfinderische Einrichtung selbst besteht aus mindestens zwei identischen Verriegelungselementen 6, die jeweils gegenüberliegend seitlich am Boden 3 eines Absetzkipperfahrzeugs angeordnet sind.

Die Verriegelungselemente 6 bestehen bevorzugt aus einem verbindungsfreien Profilelement, das ein Widerstandsmoment aufweist, das bei der maximalen Gesamtmasse eines befüllten Kipp- und Absetzbehälters 1 gegen die Kippgefahr zug- und biegestabil ist.

Die Verriegelungselemente 6 sind jeweils, wie in Fig. 1 gezeigt, in einem Schwenkpunkt 9 eines Gehäuses 8 verschwenkbar gelagert, das bevorzugt unter dem Boden 3 angeordnet ist oder, wie in Fig. 2 gezeigt, in einer Konsole 15 verschwenkbar gelagert ist, die auf dem Boden 3 festgelegt ist.

Die Verriegelungselemente 6 weisen ausgehend vom Schwenkpunkt 9 in Richtung des Kipp- oder Absetzbehälters 1 eine Länge auf, die bis zu einer horizontal verlaufenden Verstärkung 13 reicht, und sind am Ende mit einer Klaue 12 beziehungsweise bei dem bevorzugten u-Profil mit je einer Klaue auf den aufgestellten Flächen 12 ausgebildet, die in Eingriffsstellung über die horizontal verlaufende Verstärkung 13 der Kipp- und Absetzbehälter 1 übergreift. Bevorzugt ist dabei die horizontal verlaufende Verstärkung 13 die Normverstärkung von Normbehältern, die auch als Stapelkragen bezeichnet wird und die sich an die vom Behälterrand ausgehenden senkrechten Verstärkungen 21 anschließt.

Wie in Fig. 1 und 2 gezeigt, können die Verriegelungselemente 6 in der Näuhe des Bodens 3 zusätzlich mit einem Anschlag 11 versehen sein, die beim Verriegeln des Kipp- und Absetzbehälters 1 über die Verriegelungselemente 6 gleichzeitig die Kipp- und Absetzbehälter 1 eindeutig auf dem Boden 3 zwischen den Verriegelungselementen 6 platzieren und die nach dem Verriegeln zwangsläufig stets einen exakten Formschluss mit dem Kipp- und Absetzbehälter 1 eingehen.

Die Verriegelungselemente 6 können auch bevorzugt teleskopierbar ausgeführt werden, wobei ein Verriegelungselement 6 aus zwei ineinander verschiebbaren Profilelementen besteht, die durch eine Teleskopiereinheit 7 verbunden sind. Diese Teleskopiereinheit 7 kann dabei beispielsweise eine mechanische stufenlose Langloch-Teleskopiereinheit 7 oder eine hydraulische oder pneumatische Teleskopiereinheit 7 oder eine Spindelteleskopiereinheit 7 sein.

Die Verschwenkbarkeit der Verriegelungselemente 6 kann sowohl mechanisch als auch pneumatisch oder hydraulisch erfolgen, wobei die pneumatische oder hydraulische Verschwenkbarkeit für die erfinderische Einrichtung bevorzugt sein sollte.

Eine bevorzugte pneumatische oder hydraulische Verschwenkbarkeit eines Verriegelungselements 6 ist beispielsweise in Fig. 1 gezeigt. Bei dieser Ausführungsform liegt der Antrieb 10 zum Verschwenken des Verriegelungselements 6 unter dem Boden 3 und ist mit dem Gehäuse 8 verbunden, in dem das Verriegelungselement 6 verschwenkbar gelagert ist. Das Verriegelungselement 6 weist dabei einen von Schwenkpunkt 9 nach unten gerichteten kurzen Schenkel 19 auf, der im unteren Bereich vom Antrieb 10 zum Ausführen der Schwenkbewegung des Verriegelungselements 6 je nach Wahl des verwendeten Antriebes hydraulisch oder pneumatisch beaufschlagt werden kann.

Eine weitere bevorzugte Verschwenkbarkeit des Verriegelungselements ist in Fig. 2 gezeigt. Bei dieser Ausführungsform ist das Verriegelungselement 6 im Endbereich in der Konsole 15 verschwenkbar gelagert und der hydraulische oder pneumatische Antrieb 16 ist mit dem einen Ende 17 in der Konsole 15 versetzt zum Schwenkpunkt 9 und in Richtung des Randes des Bodens 3 festgelegt, wobei das andere Ende 18 des Antriebes 16 annähernd mittig am Verriegelungselement 6 festgelegt ist.

Bei beiden bevorzugten Ausführungsformen werden die pneumatischen oder hydraulischen Antriebe 10; 16 von am Absetzkipperfahrzeug vorhandenen pneumatischen oder hydraulischen Versorgungsquellen versorgt. Das heißt, dass die Wahl der Antriebe 10; 16 sich nach den am Absetzkipperfahrzeug vorhandenen zweckmäßigsten Versorgungsquellen richten sollte.

Die Verriegelung eines aufgesetzten Kipp- oder Absetzbehälters 1 ist bei Anwendung der erfindungsgemäßen Einrichtung sehr einfach und zeitsparend, da nach dem Aufsetzen der Kipp- und Absetzbehälter 1 die Verriegelungselemente 6 nur durch Betätigen der Pneumatik oder der Hydraulik in Richtung Kipp- oder Absetzbehälter 1 bis in die vorstehend beschriebene Eingriffsstellung 20 verschwenkt werden müssen. Folglich ist stets nach Erreichen der Eingriffsstellung 20 zwischen der horizontal verlaufenden Verstärkung 13 und den Klauen 12 der Verriegelungselemente 6 sowie zwischen dem Kipp- oder Absetzbehälter 1 und den Behälteranschlägen 11 der Verriegelungselemente 6 ein zusätzlicher Formschluss gegeben, der den Kipp- oder Absetzbehälter 1 nach vorne und insbesondere gegen die Kippgefahr sichert.

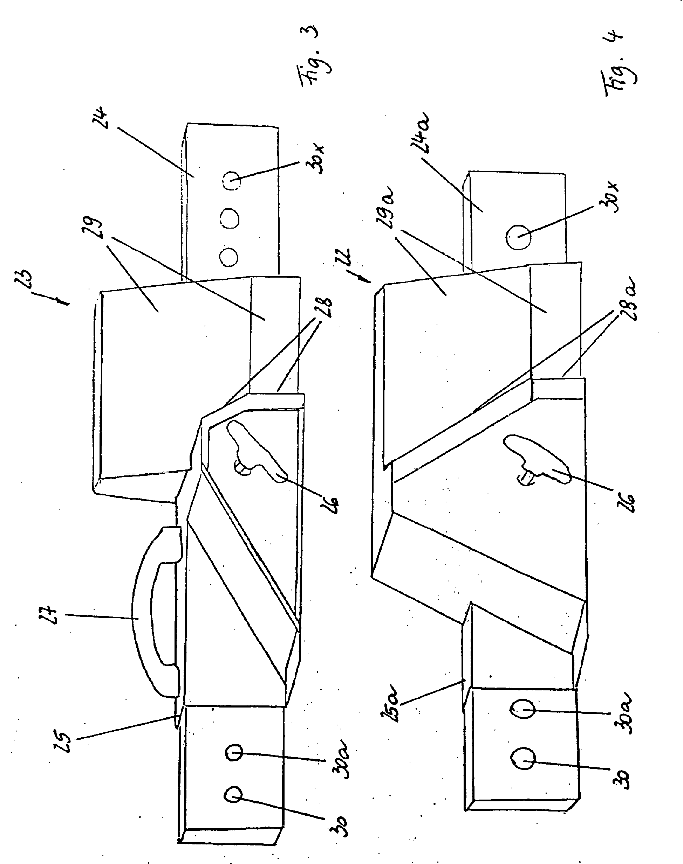

Fig. 3 bzw. 4 zeigen einen hinteren und vorderen Sicherungsschuh 22 bzw. 23, die jeweils auf einer Gleit- und Führungsschiene 24; 24a mit angeformten Führungen 25 bzw. 25a gleitbar und abnehmbar geführt sind. Die Gleit- und Führungsschienen 24 bzw. 24a sind auf dem Boden 3 bevorzugt unlösbar festgelegt und bei diesen speziell gezeigten Ausführungsformen mit Arretierungsbohrungen 30-30x ausgebildet, über welche die Sicherungsschuhe 22 bzw. 23 mittels eines federnd gelagerten und in den Sicherungsschuhen 22 bzw. 23 vorgesehenen Stelldorns 26 stufenweise gerastet und stabil arretiert werden können.

Jeder Sicherungsschuh 22 bzw. 23 ist mit einer abgestützten seitlichen Behälteranschlagsfläche 29 bzw. 29a und einer längs in bzw. gegen die Fahrtrichtung verlaufenden und abgestützten Behälteranschlagsfläche 28 bzw. 28a ausgebildet, die bevorzugt miteinander zu einem Block verschweißt sind und eine Kontur aufweisen, die jeweils der Kontur der angrenzenden Außenfläche eines aufgesetzten Kipp- und Absetzbehälters 1 angepasst ist.

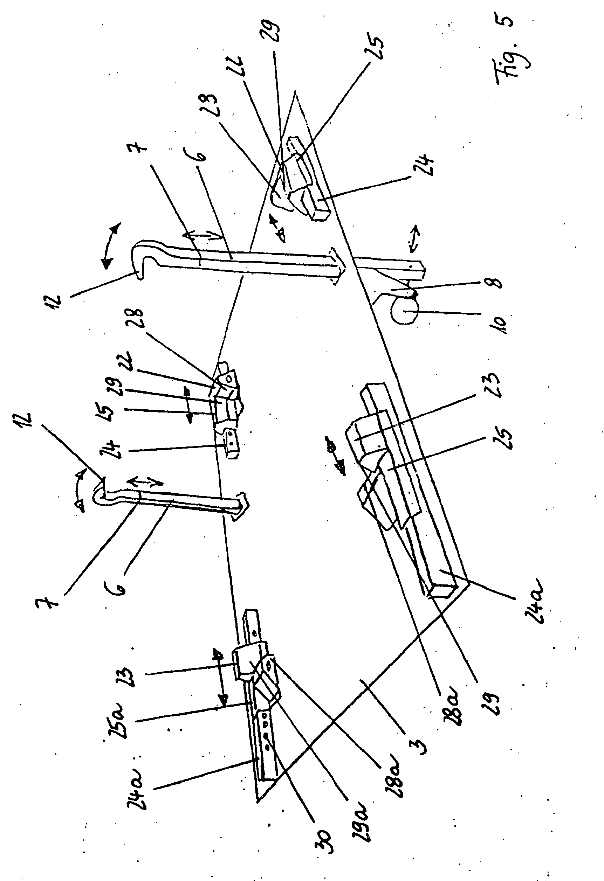

Die Anordnung der Gleit- und Führungsschienen 24; 24a mit geführten und arretierten Sicherungsschuhen 22; 23 sowie mit mindestens zwei seitlichen vorgesehenen Verriegelungselementen 6 ist am Boden 3 eines Absetzkipperfahrzeuges in Fig. 5 gezeigt.

Wie in Fig. 5 dargestellt, sind im hinteren Endbereich und im vorderen Endbereich des Bodens 3 und quer zum Boden 3 parallel versetzt je eine Gleit- und Führungsschiene 24a bzw. 24 angeordnet, die jeweils in dieser speziellen Ausführungsform auf dem Boden 3 aufgeschweißt sind. Die Gleit- und Führungsschienen 24a bzw. 24 sind bevorzugt mit parallel zum Boden 3 verlaufenden Arretierungsbohrungen 30 - 30x ausgebildet, über welche jeweils der aufgesetzte und über die Führung 25a bzw. 25 gleitend geführte Sicherungsschuh 23 bzw. 22 stufenweise mittels einem im Sicherungsschuh 23 bzw. 22 angeordneten und federnd gelagerten Stelldorn 26 gerastet und arretiert wird.

Beiderseits des Bodens 3 und bevorzugt mit den Gleit- und Führungschienen 24a. 24 auf einer Mittellinie liegend ist bei dieser gezeigten Ausführungsform je ein Verriegelungselement 6 angeordnet, das in diesem Fall durch den Boden durchgeführt ist und in einem angedeuteten Gehäuse 8 quer zum Boden 3 mittels Antrieb 10, der bevorzugt ein Federspeicherzylinder mit pneumatischer Entriegelung ist, verschwenkbar gelagert ist.

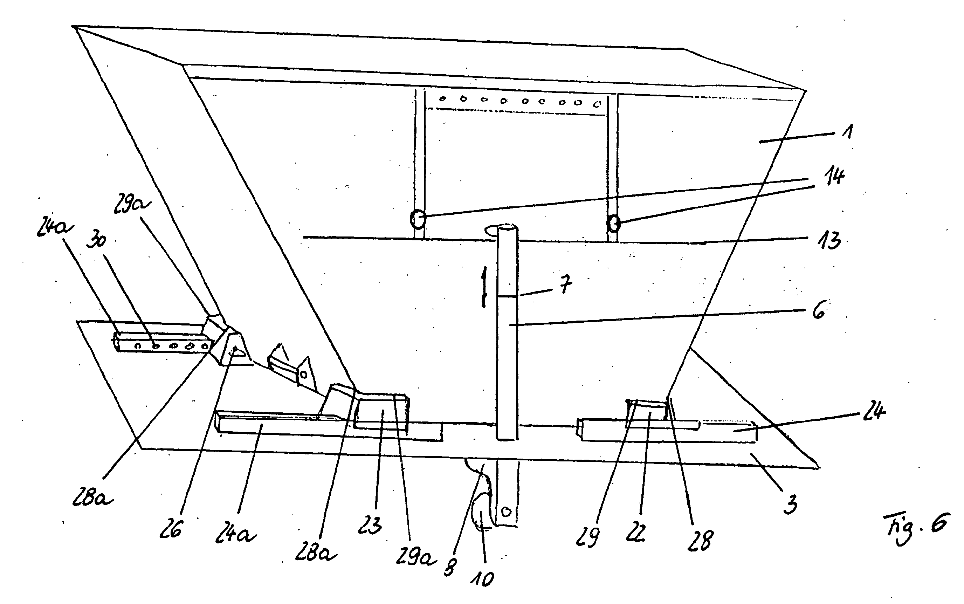

Wie ein aufgesetzter Kipp- oder Absetzbehälter 1 durch eine im Eingriff befindliche vorgeschlagene Ladungssicherung auf dem Boden 3 eines Absetzkipperfahrzeuges gesichert ist, zeigt die Fig. 6.

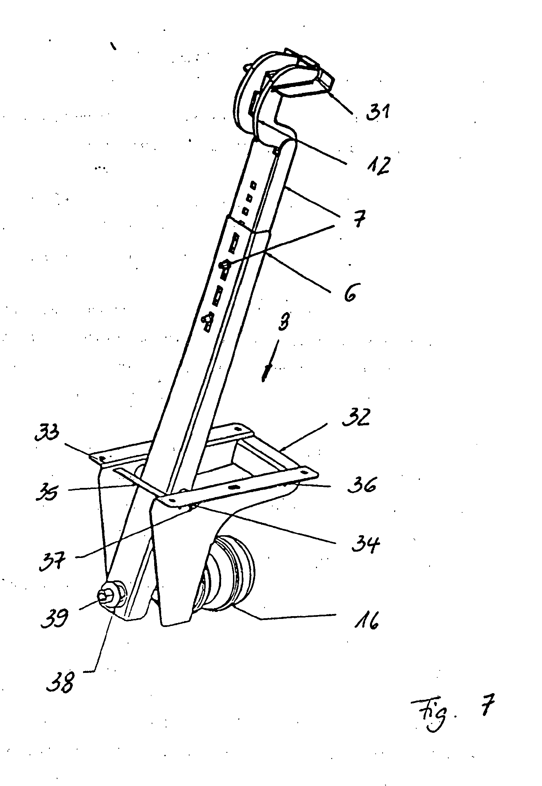

Eine bevorzugte Ausführungsform eines Verriegelungselements 6 ist in Fig. 7 gezeigt. Dieses Verriegelungselement 6 besteht aus einem U-Profil in dem eine Teleskopiereinheit 7, die bevorzugt auch aus einem U-Profil besteht, gleitend geführt und stufenweise arretierbar ist. Am oberen Ende der Teleskopiereinheit ist eine Klaue 12 mit einer speziell ausgebildeten Klemmauflage 31 angeordnet, die in Eingriffsstellung über eine horizontale Verstärkung 13, die bevorzugt die Normverstärkung eines Kipp- oder Absetzbehälters 1 ist, übergreift.

Das von der Klaue 12 abgewandte Ende ist in einem Gehäuse 8 drehbar in einem Lager 34 gelagert. Das Gehäuse 8 besteht aus zwei Seitenteilen 36, die jeweils mit einer im rechten Winkel angeformten horizontal liegenden Konsole 33 ausgebildet sind, die an dem Boden 3, nicht gezeigt, des Absetzkipperfahrzeugs fest verbunden sind. Die beiden Seitenteile 36 sind durch Rippen 32, 35 zu dem Gehäuse 8 verbunden, in dem der Drehpunkt 37 und das Lager 34 des Verriegelungselements 6 angeordnet sind. Am unteren Ende des Verriegelungselements 6 ist die Antriebsbefestigung 39 für den Antrieb 16 zum Verschwenken des Verriegelungselements 6 vorgesehen, die bevorzugt in einer Kugelpfanne 38 gelagert ist. Als Antrieb 16 ist bei dieser bevorzugt ausgewählten Ausführungsform ein Federspeicherzylinder mit pneumatischer Entriegelung eingesetzt, der sich als sehr vorteilhaft erwiesen hat.

Selbstverständlich ist die erfinderische Einrichtung nicht nur beschränkt auf ein Absetzkipperfahrzeug selbst, sondern auch für Anhänger oder ähnliche Fahrzeugarten, mit denen ein Transport von Kipp- oder Absetzbehältern 1 erfolgt, geeignet.

### Aufstellung der Bezugszeichen

- 1: Kipp- und Absetzbehälter
- 2: angedeutetes Fahrgestell
- 3: Boden
- 4: Absetzarm
- 5: Absetzkette
- 6: Verriegelungselement
- 7: Teleskopiereinheit
- 8: Gehäuse
- 9: Schwenkpunkt
- 10: Antrieb des Verriegelungselements
- 11: Anschlag
- 12: Klaue
- 13: horizontale Verstärkung
- 14: Aufhängezapfen
- 15: Konsole
- 16: Antrieb des Verriegelungselements
- 17: Ende Antrieb
- 18: Ende Antrieb
- 19: kurzer Schenkel
- 20: Eingriffsstellung
- 21: senkrechte Verstärkung
- 22: vorderer Sicherungsschuh
- 23: hinterer Sicherungsschuh
- 24: Gleit- und Führungsschiene hinterer Sicherungsschuh
- 24 a: Gleit- und Führungsschiene vorderer Sicherungsschuh
- 25: Führung hinterer Sicherungsschuh
- 25 a: Führung vorderer Sicherungsschuh
- 26: Stelldorn
- 27: Griff
- 28: Behälteranschlagsflächen in Längsrichtung
- 28 a: Behälteranschlagsflächen in Längsrichtung
- 29: seitliche Behälteranschlagsflächen
- 29 a: seitliche Behälteranschlagsflächen
- 30 - 30x: Arretierungsbohrungen
- 31: Klemmauflage
- 32: Rippe
- 33: Konsole
- 34: Lager
- 35: Rippe
- 36: Seitenteil Konsole
- 37: Drehpunkt Verriegelungselement
- 38: Kugelpfanne (Lagerung)
- 39: Antriebsbefestigung

## Patentansprüche

1. Einrichtung zur Ladungssicherung für den Transport von genormten Kipp- oder Absetzbehältern (1) auf einem Absetzkipperfahrzeug, das am Boden (3) mit Behälteränschlägen versehen ist, die einen aufgesetzten Kipp- oder Absetzbehälter (1) zur Seite sowie in Fahrtrichtung kraft- und/oder formschlüssig gegen Verrutschen sichern, **dadurch gekennzeichnet, dass** die Behälteranschläge jeweils mindestens zwei vordere und hintere Sicherungsschuhe (22 bzw. 23) sind, die mit Behälteranschlagsflächen (28 bzw.28a) in bzw. gegen die Fahrtrichtung und mit seitlichen Behälteranschlagsflächen (29 bzw. 29a) ausgebildet sind, die jeweils eine Kontur aufweisen, die zu den angrenzenden Flächen eines aufgesetzten Kippund Absetzbehälters (1) formschlüssig ist, und dass seitlich auf oder unter dem Boden (3) des Absetzkipperfahrzeuges mindestens zwei gegenüberliegende und quer zum Boden (3) verschwenkbare und in Eingriffsstellung (20) arretierbare Verriegelungselemente (6) mit mindestens einer Klaue (12) angeordnet sind, die in Eingriffsstellung (20) über eine horizontal verlaufende seitliche Verstärkung (13) des Kipp- oder Absetzbehälters (1) formschlüssig übergreift.

2. Einrichtung zur Ladungssicherung nach Anspruch 1, **dadurch gekennzeichnet, dass** die Sicherungsschuhe (22; 23) auf Gleit- und Führungsschienen (24a; 24) horizontal verschieb- und arretierbar sowie bevorzugt abnehmbar festgelegt sind, die mit dem Boden (3) des Absetzkipperfahrzeuges fest verbunden sind.

3. Einrichtung zur Ladungssicherung nach Anspruch 1 und 2, **dadurch gekennzeichnet, dass** die Sicherungsschuhe (22;23) mittels Arretierungsbohrungen (30-30x) in den Gleit- und Führungsschienen (24,24a) mit einem im Sicherungsschuh (22;23) angeordneten federnd gelagerten Stelldorn (26) stufenweise rastbar sind.

4. Einrichtung zur Ladungssicherung nach einem oder mehreren der Ansprüche 1 bis 3, **dadurch gekennzeichnet, dass** der vordere Sicherungsschuh (22) eine Höhe bis max. 400 mm aufweist.

5. Einrichtung zur Ladungssicherung nach einem oder mehreren der Ansprüche 1 bis 3, **dadurch gekennzeichnet, dass** der hintere Sicherungsschuh (23) eine Höhe bis max. 300 mm, bevorzugt 85 mm aufweist.

6. Einrichtung zur Ladungssicherung nach einem oder mehreren der Ansprüche 1 bis 5, **dadurch gekennzeichnet, dass** die horizontale Verstärkung (13) am Kipp- und Absetzbehälter (1) gleich die Normverstärkung in der Seitenwand des Kipp- oder Absetzbehälters (1) ist.

7. Einrichtung zur Ladungssicherung nach einem oder mehreren der Ansprüche 1 bis 6, **dadurch gekennzeichnet, dass** jedes Verriegelungselement (6) in einem auf oder unter dem Boden (3) des Absetzkipperfahrzeugs angeordneten Gehäuse (8) oder Konsole (15) verschwenkbar gelagert ist und dass jedes Verriegelungselement (6) über einen hydraulischen oder pneumatischen oder mechanischen Antrieb (10; 16) angetrieben ist.

8. Einrichtung zur Ladungssicherung nach Anspruch 7, **dadurch gekennzeichnet, dass** der hydraulische oder pneumatische oder mechanische Antrieb (10) am gegenüberliegenden Ende der Klaue (12) und unterhalb des Schwenkpunktes (9) angeordnet ist.

9. Einrichtung zur Ladungssicherung nach Anspruch 7, **dadurch gekennzeichnet, dass** der hydraulische oder pneumatische oder mechanische Antrieb (16) mit dem einen Ende (18) zwischen dem Schwenkpunkt (9) und der Klaue (12) und mit dem anderen Ende (18) in der Konsole (15) festgelegt ist.

10. Einrichtung zur Ladungssicherung nach einem oder mehreren der Ansprüche 1 bis 9, **dadurch gekennzeichnet, dass** das Verriegelungselement (6) ein teleskopierbares und arretierbares Verriegelungselement (6) ist.

11. Einrichtung zur Ladungssicherung nach Anspruch 10, **dadurch gekennzeichnet, dass** das Verriegelungselement (6) mechanisch oder pneumatisch oder hydraulisch teleskopierbar ist.

12. Einrichtung zur Ladungssicherung nach einem oder mehreren der Ansprüche 1 bis 11, **dadurch gekennzeichnet, dass** ein Verriegelungselement (6) und die Teleskopiereinheit (7) Profilelemente mit einer statischen Auslegung sind, die gegen die einwirkenden Fliehkräfte während eines Fahrbetriebs zug- und biegestabil sind.

13. Einrichtung zur Ladungssicherung nach einem oder mehreren der Ansprüche 1 bis 12, **dadurch gekennzeichnet, dass** bei nur zwei gegenüberliegenden Verriegelungselementen (6) die Verriegelungselemente (6) annähernd mittig zum Kipp- oder Absetzbehälter (1) angeordnet sind.

14. Einrichtung zur Ladungssicherung für den Transport von genormten Kipp- oder Absetzbehältern (1) auf einem Absetzkipperfahrzeug, das am Boden (3) mit mechanisch oder hydraulisch oder pneumatisch zu betätigenden bzw. festen Behälteranschlägen oder Verriegelungen versehen ist, die einen aufgesetzten Kipp- oder Absetzbehälter (1) zur Seite sowie in und gegen die Fahrtrichtung kraft- und/oder formschlüssig gegen Verrutschen sichern, **dadurch gekennzeichnet, dass** seitlich auf oder unter dem Boden (3) des Absetzkipperfahrzeuges mindestens zwei gegenüberliegende und quer zum Boden (3) verschwenkbare und in Eingriffsstellung (20) arretierbare Verriegelungselemente (6) mit mindestens einer Klaue (12) angeordnet sind, die in Eingriffsstellung (20) über eine horizontal verlaufende seitliche Verstärkung (13) des Kipp- oder Absetzbehälters (1) formschlüssig übergreift.

## Claims

1. Device for securing loads for the transportation of standardised tipping or sedimentation tanks (1) on a sedimentation tipper vehicle which is provided at the base (3) with tank stops which secure a tipping or sedimentation tank (1) placed thereon at the side and in the direction of travel in a non-positive-locking and/or positive-locking manner to prevent slippage, **characterised in that** the tank stops are in each case at least two front and rear locking shoes (22 / 23) which are formed with tank stop surfaces (28 / 28a) in or opposite to the direction of travel and with lateral tank stop surfaces (29 / 29a) which each have a contour which is positive-locking with respect to the adjoining surfaces of a tipping and sedimentation tank (1) placed thereon, and that disposed at the side on or below the base (3) of the sedimentation tipper vehicle are at least two opposite-lying locking elements (6) which are pivotable transversely with respect to the base (3) and can be locked in an engagement position (20) and have at least one claw (12) which in the engagement position (20) engages in a positive-locking manner over a horizontally extending lateral reinforcement (13) of the tipping or sedimentation tank (1).

2. Device for securing loads as claimed in claim 1, **characterised in that** the locking shoes (22; 23) are fixed on slide and guide rails (24a; 24) in such a manner as to be horizontally displaceable and lockable and preferably detachable, said slide and guide rails being fixedly connected to the base (3) of the sedimentation tipper vehicle.

3. Device for securing loads as claimed in claim 1 and 2, **characterised in that** the locking shoes (22; 23) can be latched in a stepwise manner by means of locking bores (30-30x) in the slide and guide rails (24, 24a) with a resiliently mounted adjusting mandrel (26) disposed in the locking shoe (22; 23).

4. Device for securing loads as claimed in any one or several of claims 1 to 3, **characterised in that** the front locking shoe (22) has a height up to a maximum of 400 mm.

5. Device for securing loads as claimed in any one or several of claims 1 to 3, **characterised in that** the rear locking shoe (23) has a height up to a maximum of 300 mm, preferably 85 mm.

6. Device for securing loads as claimed in any one or several of claims 1 to 5, **characterised in that** the horizontal reinforcement (13) on the tipping and sedimentation tank (1) is identical to the standard reinforcement in the sidewall of the tipping or sedimentation tank (1).

7. Device for securing loads as claimed in any one or several of claims 1 to 6, **characterised in that** each locking element (6) is pivotably mounted in a housing (8) or console (15) disposed on or under the base (3) of the sedimentation tipper vehicle and that each locking element (6) is driven by a hydraulic or pneumatic or mechanical drive (10; 16).

8. Device for securing loads as claimed in claim 7, **characterised in that** the hydraulic or pneumatic or mechanical drive (10) is disposed at the opposite end of the claw (12) and below the pivot point (9).

9. Device for securing loads as claimed in claim 7, **characterised in that** the hydraulic or pneumatic or mechanical drive (16) is fixed at one end (18) between the pivot point (9) and the claw (12) and at the other end (18) in the console (15).

10. Device for securing loads as claimed in any one or several of claims 1 to 9, **characterised in that** the locking element (6) is a telescopic and lockable locking element (6).

11. Device for securing loads as claimed in claim 10, **characterised in that** the locking element (6) is mechanically or pneumatically or hydraulically telescopic.

12. Device for securing loads as claimed in any one or several of claims 1 to 11, **characterised in that** a locking element (6) and the telescoping unit (7) are profile elements having a static design which are resistant to traction and bending with respect to the effective centrifugal forces during a drive operation.

13. Device for securing loads as claimed in any one or several of claims 1 to 12, **characterised in that** in the case of only two opposite-lying locking elements (6) the locking elements (6) are disposed approximately centrally with respect to the tipping or sedimentation tank (1).

14. Device for securing loads for the transportation of standardised tipping or sedimentation tanks (1) on a sedimentation tipper vehicle which is provided at the base (3) with tank stops or locks which are to be actuated mechanically or hydraulically or pneumatically or are fixed and which secure a tipping or sedimentation tank (1) placed thereon at the side and in and opposite to the direction of travel in a non-positive-locking and/or positive-locking manner to prevent slippage, **characterised in that** disposed at the side on or below the base (3) of the sedimentation tipper vehicle are at least two opposite-lying locking elements (6) which are pivotable transversely with respect to the base (3) and can be locked in an engagement position (20) and have at least one claw (12) which in the engagement position (20) engages in a positive-locking manner over a horizontally extending lateral reinforcement (13) of the tipping or sedimentation tank (1).

## Revendications

1. Dispositif de sécurisation de chargement pour le transport de bennes basculantes ou de bennes de dépôt (1) standardisées sur un véhicule multibenne, qui est pourvu au niveau du plancher (3) de butées de benne, qui empêchent une benne basculante ou une benne de dépôt (1) déposée de glisser sur le côté et dans le sens de la marche à force et/ou par complémentarité de formes, **caractérisé en ce que** les butées de benne constituent respectivement au moins deux patins de sécurité (22 ou 23) avant et arrière, lesquels sont réalisés avec des faces d'impact de benne (28 ou 28a) dans le sens de la marche ou dans le sens inverse à cette dernière et avec des faces d'impact latérales de benne (29 ou 29a), lesquelles présentent respectivement un contour, qui présente une complémentarité de forme par rapport aux surfaces adjacentes d'une benne basculante ou d'une benne de dépôt (1) déposée, et **en ce qu'**au moins deux éléments de verrouillage (6) dotés d'au moins une griffe (12), se faisant face, pouvant pivoter de manière transversale par rapport au plancher (3) et pouvant être bloqués dans une position d'engrènement (20) sont disposés latéralement sur ou sous le plancher (3) du véhicule multibenne, la griffe recouvrant, par complémentarité de forme, en position d'engrènement (20), un renforcement (13) latéral s'étendant de manière horizontale de la benne basculante ou de la benne de dépôt (1).

2. Dispositif de sécurisation de chargement selon la revendication 1, **caractérisé en ce que** les patins de sécurité (22 ; 23) sont fixés de manière à pouvoir être coulissés et bloqués sur des glissières ou des rails de guidage (24a, 24) de manière horizontale ainsi que de préférence de manière retirable, lesquels rails sont reliés de manière fixe au plancher (3) du véhicule à benne de dépôt.

3. Dispositif de sécurisation de chargement selon la revendication 1 et 2, **caractérisé en ce que** les patins de sécurité (22 ; 23) peuvent être enclenchés par paliers au moyen d'alésages de blocage (30 - 30x) dans les glissières et les rails de guidage (24, 24a) à l'aide d'un mandrin de réglage (26) logé de manière élastique, disposé dans le patin de sécurité (22 ; 23).

4. Dispositif de sécurisation de chargement selon l'une quelconque ou plusieurs des revendications 1 à 3, **caractérisé en ce que** le patin de sécurité avant (22) présente une hauteur pouvant aller jusqu'à maximum 400 mm.

5. Dispositif de sécurisation de chargement selon l'une quelconque ou plusieurs des revendications 1 à 3, **caractérisé en ce que** le patin de sécurité arrière (23) présente une hauteur pouvant aller jusqu'à maximum 300 mm, de préférence de 85 mm.

6. Dispositif de sécurisation de chargement selon l'une quelconque ou plusieurs des revendications 1 à 5, **caractérisé en ce que** le renforcement (13) horizontal sur la benne basculante et la benne de dépôt (1) est identique au renforcement normé de la paroi latérale de la benne basculante ou de la benne de dépôt (1).

7. Dispositif de sécurisation de chargement selon l'une quelconque ou plusieurs des revendications 1 à 6, **caractérisé en ce que** chaque élément de verrouillage (6) est logé de manière à pouvoir pivoter dans un boîtier (8) ou une console (15) disposé(e) sur ou sous le plancher (3) du véhicule multibenne, et **en ce que** chaque élément de verrouillage (6) est entraîné par l'intermédiaire d'un entraînement (10 ; 16) hydraulique ou pneumatique ou mécanique.

8. Dispositif de sécurisation de chargement selon la revendication 7, **caractérisé en ce que** l'entraînement (10) hydraulique ou pneumatique ou mécanique est disposé sur l'extrémité opposée de la griffe (12) et sous le point de pivotement (9).

9. Dispositif de sécurisation de chargement selon la revendication 7, **caractérisé en ce que** l'entraînement (16) hydraulique ou pneumatique ou mécanique est fixé par l'une des extrémités (18) entre le point de pivotement (9) et la griffe (12) et par l'autre extrémité (18) dans la console (15).

10. Dispositif de sécurisation de chargement selon l'une quelconque ou plusieurs des revendications 1 à 9, **caractérisé en ce que** l'élément de verrouillage (6) est un élément de verrouillage (6) télescopique et pouvant être bloqué.

11. Dispositif de sécurisation de chargement selon la revendication 10, **caractérisé en ce que** l'élément de verrouillage (6) est télescopique par commande mécanique ou pneumatique ou hydraulique.

12. Dispositif de sécurisation de chargement selon l'une quelconque ou plusieurs des revendications 1 à 11, **caractérisé en ce qu'**un élément de verrouillage (6) et l'unité télescopique (7) sont des éléments profilés présentant une configuration statique, lesquels sont résistants à la traction et à la flexion vis-à-vis de forces centrifuges agissant lors d'un trajet.

13. Dispositif de sécurisation de chargement selon l'une quelconque ou plusieurs des revendications 1 à 12, **caractérisé en ce que** les éléments de verrouillage (6) sont disposés approximativement au centre par rapport à la benne basculante ou à la benne de dépôt (1) uniquement dans le cas de deux éléments de verrouillage (6) se faisant face.

14. Dispositif de sécurisation de chargement pour le transport de bennes basculantes ou de bennes de dépôt (1) standardisées sur un véhicule multibenne, lequel est pourvu au niveau du plancher (3) de butées de benne ou de verrouillages fixes ou à actionnement mécanique ou hydraulique ou pneumatique, lesquels empêchent une benne basculante ou une benne de dépôt (1) déposée de glisser sur le côté ainsi que dans le sens de la marche et dans le sens inverse de cette dernière à force et/ou par complémentarité de forme, **caractérisé en ce qu'**au moins deux éléments de verrouillage (6) dotés d'au moins une griffe (12), se faisant face, pouvant pivoter de manière transversale par rapport au plancher (3) et pouvant être bloqués en position d'engrènement (20) sont disposés sur le côté sur ou sous le plancher (3) du véhicule multibenne, la griffe recouvrant, par complémentarité de forme, en position d'engrènement (20), un renforcement (13) latéral s'étendant de manière horizontale, de la benne basculante ou de la benne de dépôt (1).
